# EUROPEAN PATENT SPECIFICATION

(11) **EP 2 662 643 B1**
(45) Date of publication and mention of the grant of the patent: **16.04.2014**
(21) Application number: 12179632.0
(22) Date of filing: 08.08.2012
(51) Int. Cl.: F24J 2/52, H01L 31/0525, H01L 31/042, H02S 40/44

(54) **Modular framework structure for photovoltaic, solar and hybrid panels**
Modulare Rahmenwerkstruktur für Photovoltaik-, Solar- und Hybridplatten
Structure de cadre modulaire pour panneaux photovoltaïques, solaires et hybrides

(30) Priority: 08.05.2012 IT PS20120008
(43) Date of publication of application: 13.11.2013
(73) Proprietor: Alluminia S.r.l., 61028 Sassocorvaro (PU) (IT)
(72) Inventor: Garulli, Eliseo, 61020 Lunano PU (IT)
(74) Representative: Gustorf, Gerhard

(56) References cited:
- EP-A1- 2 309 550
- WO-A1-2011/099413
- WO-A1-2011/132211
- WO-A1-2012/017994
- FR-A1- 2 961 299
- JP-A- 10 062 017
- JP-A- 11 093 345

## Description

### State of the art

The technology of storing energy through photovoltaic panels and solar panels, by way of alternative to combustion of fossil fuels and gas, is more and more applied in civil and industrial sector, by laying on site - facing the sun - solar panels duly framed, especially for fixing to the ground or to building roofs.

However, the prior art also provides for hybrid panels, i.e. a combination of photovoltaic panels and solar panels, substantially in two embodiments:

One provides for the solar panel, i.e. the heat exchanger, arranged ahead with respect to the photovoltaic panel with reference to the solar rays; in such alternative, the solar panel is conceived transparent and the liquid circulating by heat convection somehow serves as a lens with respect to the underlying photovoltaic panel.

The other embodiment is substantially inverse and it provide for the photovoltaic panel facing the sun, with the underlying heat exchanger, which in this case may be any coil moulded commercially for heat-convection and/or forced hydrodynamics, which receives heat by interposing the photovoltaic panel, where the heat energy supplied to the underlying heat exchanger is increased by the pigmentation of the panel.

In both embodiments the liquid of the solar panel contributes to keep the temperature of the photovoltaic panel constant and in particular it avoids the overheating of the latter, wherein it is known that above a given temperature the efficiency of the photovoltaic cells drops sharply.

Obviously, the hybrid panels, however conceived, have a greater thickness with respect to that of the solar and photovoltaic panels laid on site separately, thus assuming the combination thereof.

FR 2 961 299 A1 which is the most pertinent prior art document discloses a modular framework structure which may be used alternatively for solar or for photovoltaic panels.

### Objects of the invention

In this context, the main object of the present invention is to provide an innovative framework structure for laying - on site - solar exposure panel structures, polyvalent for photovoltaic panels, solar panels and hybrid photovoltaic-solar panels regardless of how they are interactively conceived.

Another object of the present invention is that of achieving the previous object simultaneously providing means suitable to actually adapt and interact with the further construction and constitution elements required of the solar rays energy storage techniques.

Still another object of the present invention is that of attaining the previous objects through a structure that is as modular, expandable and polyvalent as possible.

A further object of the present invention is to attain the previous objects through a structure that is simple and functional, safe in use and relatively inexpensive considering the results practically obtained therewith.

### Summary of the solution concept

These and other objects are attained by means of a modular framework structure for photovoltaic, solar and hybrid panels according to the present claim 1.

### Description of the attached drawings

Further characteristics and advantages of the polyvalent modular framework structure for photovoltaic, solar and hybrid panels, according to the present invention, will be more apparent from the detailed description that follows of a preferred and non-exclusive embodiment thereof, represented solely by way of non-limiting example in the six attached drawings where:
Figure 1 shows a front view of the framework structure for solar exposure panels according to the present invention;
Figures 2 and 3 show a first assembly and adaptation option in transverse, vertical and horizontal section;
Figures 4 and 5 show a second assembly and adaptation option in transverse, vertical and horizontal section;
Figure 6 shows the front section of such second assembly and adaptation option;

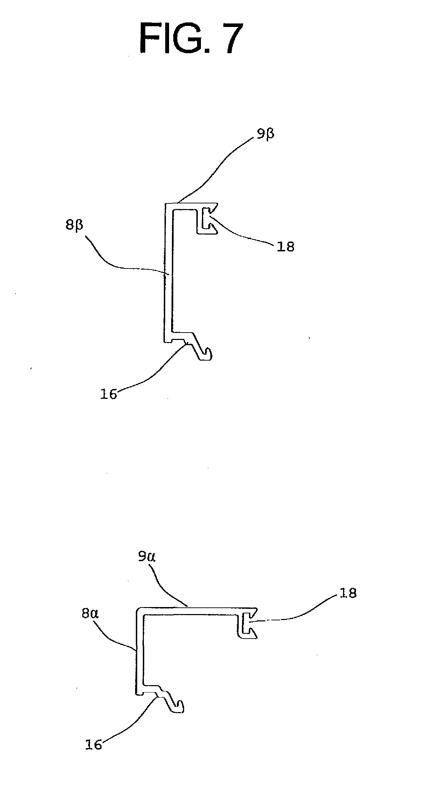

Figure 7 shows the transverse section of two alternative construction elements, suitable to differentiate two assembly and adaptation options of the framework structure for solar exposure panels according to the present invention.

### Static description of a preferred embodiment

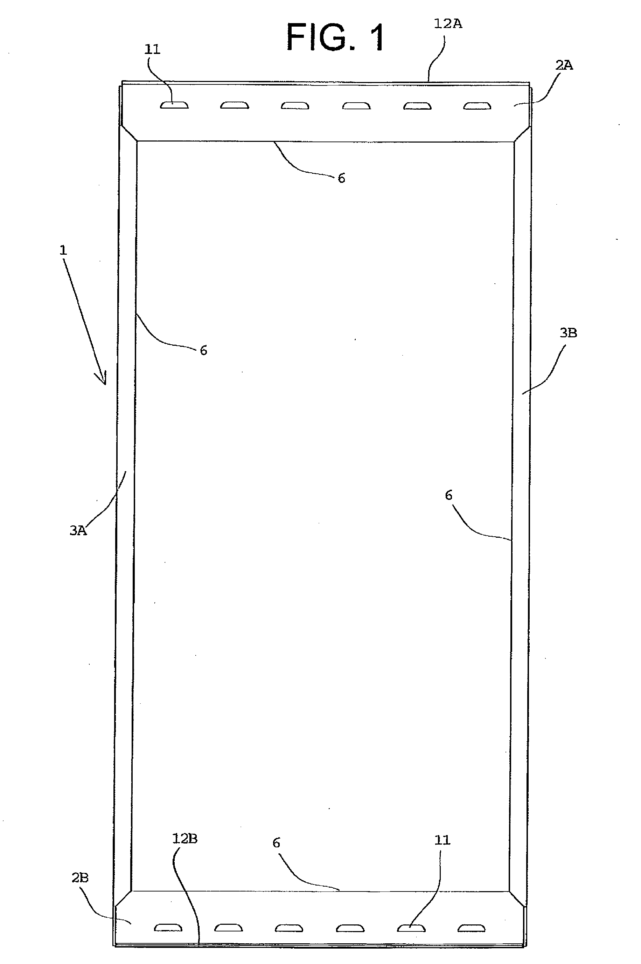

With reference to such figures, and in particular Figure 1, a framework structure for solar exposure panels according to the present invention, represented in the view facing the sun, in the preferred rectangular embodiment thereof, comprising almost symmetric upper 2A and lower 2B bases, made of aluminium sections, and symmetric left 3A and right 3B uprights, also made of aluminium sections is indicated in its entirety with 1.

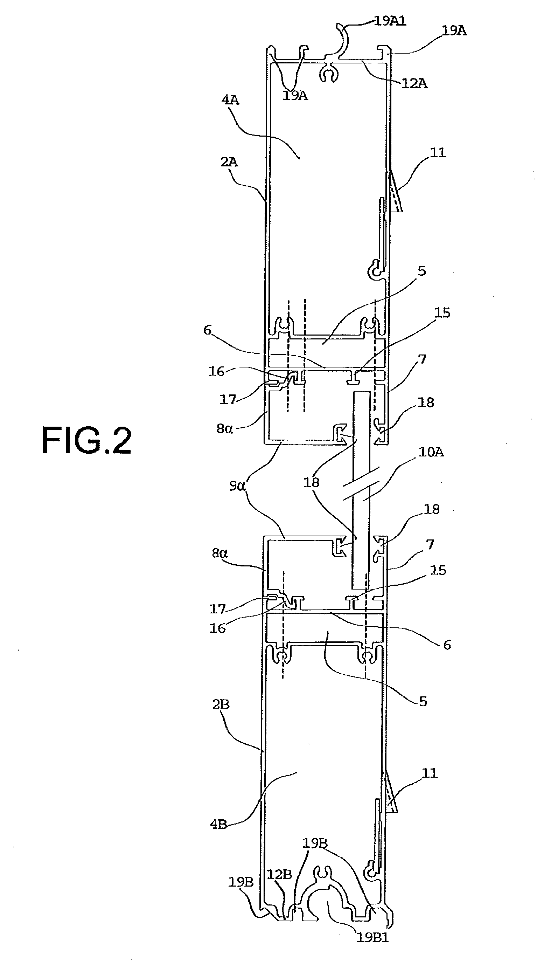

The transverse section of the upper 2A and lower 2B base sections (see figure 2) has an outer larger chamber 4A, 4B, an intermediate smaller chamber 5 and counterfaced inner edges 6, defined by a fixed sidewall 7 on the side facing the sun and by an interchangeable sidewall 8α with prominent inward projection 9α.

The upper 2A and lower 2B base sections are also provided with sloping aeration slits 11 which place the respective outer larger chambers 4A, 4B in communication with the external environment, and they are also provided with complementary shake surfaces 12A and 12B on the outer edges, indicated using the same reference numbers, adapted for the mutual coupling, described more in detail hereinafter.

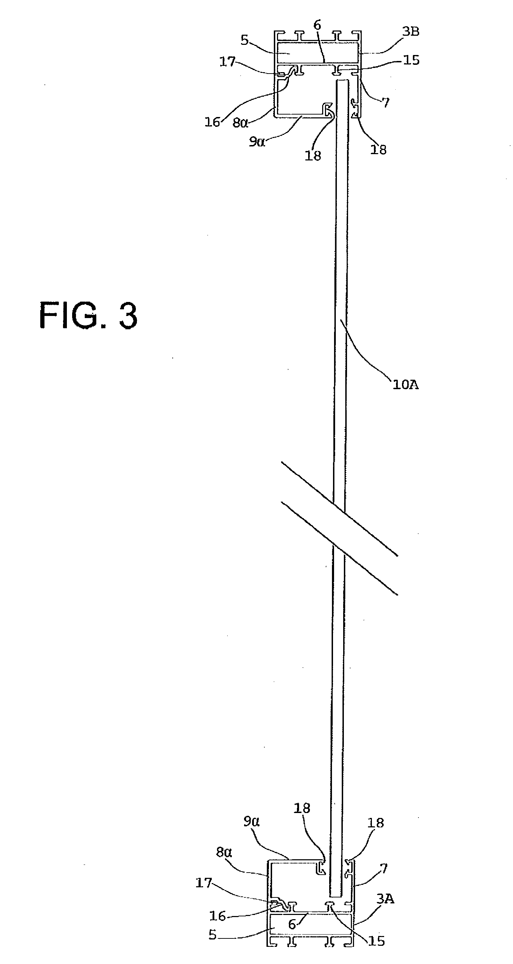

The transverse section of the left 3A and right 3B lateral sections (see figure 3) has the smaller chamber 5A, 5B alone and the previously shown counterfaced inner edges 6, defined by the fixed sidewall 7 on the side facing the sun and by the interchangeable sidewall 8α with prominent inward projection 9α.

Between the fixed sidewall 7 and the interchangeable sidewall 8α with prominent inward projection 9α of the counterfaced inner edges 6 of the base sections 2A and 2B and of the lateral sections 3A and 3B there is perimetrally engaged a photovoltaic panel of the known type, schematically illustrated and indicated with 10A.

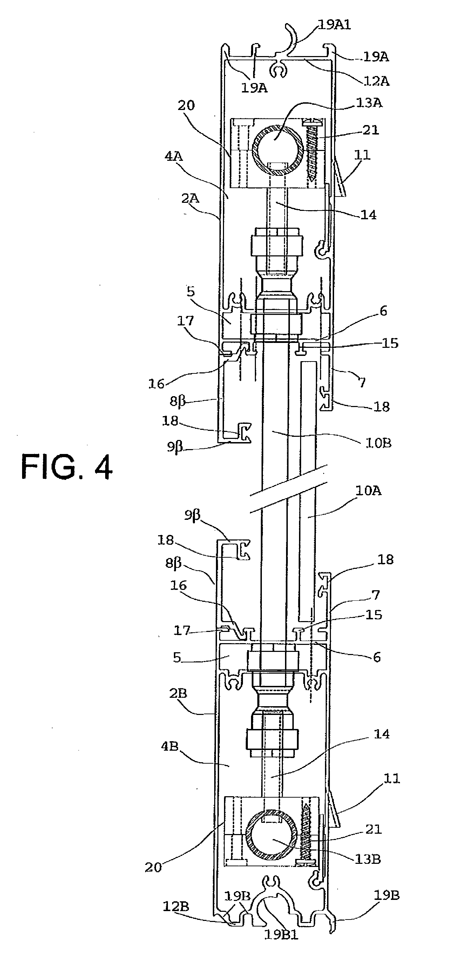

In the second assembly option (see figure 4) the section of the upper 2A and lower 2B base sections has the same outer larger chamber 4A, 4B, and the same intermediate smaller chamber 5A, 5B, as well as the counterfaced inner edges 6, defined by a fixed sidewall 7 on the side facing the sun, but in this option the interchangeable sidewall 8β has a reduced inward projection 9β.

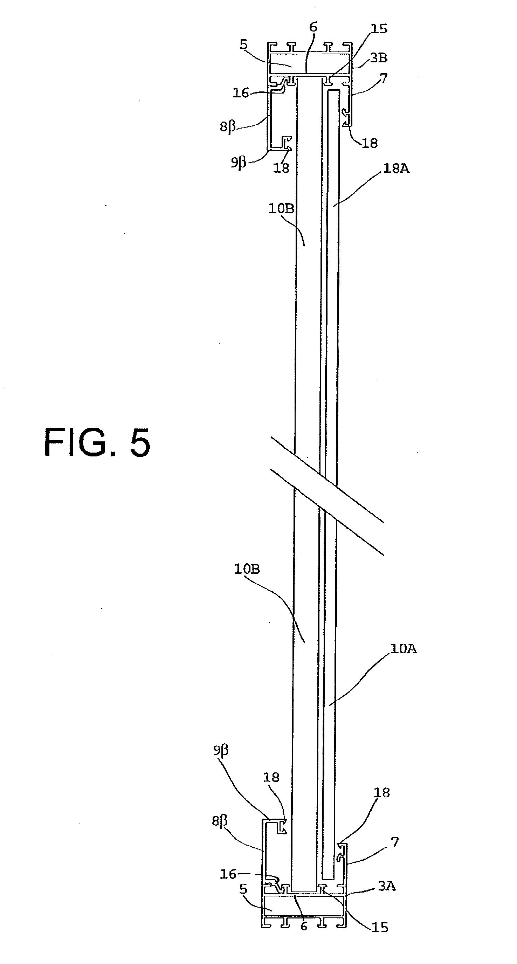

In turn, in the second assembly option, the transverse section of the left 3A and right 3B lateral sections (see figure 5) has the smaller chamber 5 alone and the same previously shown counterfaced inner edges 6, defined by the fixed sidewall 7 on the side facing the sun and by the interchangeable sidewall 8β with reduced inward projection 9β.

In the second assembly option, between the fixed sidewall 7 and the interchangeable sidewall 8β with reduced inward projection 9β of the counterfaced inner edges 6 of the base sections 2A and 2B and of the lateral sections 3A and 3B, besides a photovoltaic panel of the known type, schematically illustrated and indicated with 10A being engaged perimetrally thereon, there is also engaged a parallel heat exchanger 10B, schematically illustrated and arranged on the side hidden from the sun of the photovoltaic panel 10A, so as to create a sandwich of two photovoltaic 10A and solar 10B panels.

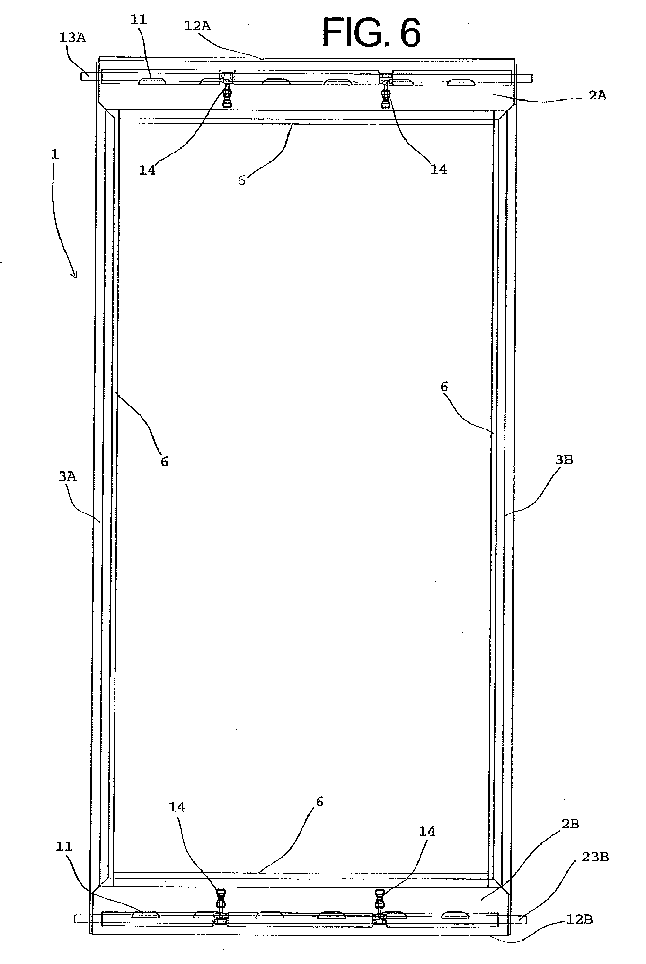

In the second assembly option, in the outer larger chambers 4A and 4B of the upper 2A and lower 2B base sections there are respectively housed pipes 13A and 13B (see figures 4 and 6) for the supply and outflow of water, laterally projecting from the shape of the framework 1 and provided - at the median part - with fittings 14 passing through the inner edges 6 of the framework 1 and there connected to the solar panel 10B.

In detail, the inner edges 6 of the upper 2A and lower 2B base sections as well as of the left 3A and right 3B upright sections, have a pair of T-shaped parallel strips 15, beneath the jetty of one of which there is inserted the foot 16 of the interchangeable sidewalls 8α or 8β, supported by the heel of a margin rib 17, opposite to the fixed sidewall 7; both the latter and the interchangeable sidewalls 8α and 8β have - at the apex - opposite receptacles 18 for the retention of gaskets, not illustrated, for the abutment of the photovoltaic panel 10A and/or of the solar panel 10B and/or of glasses and/or sheets for relative containment.

In detail the outer edge 12A of the upper base section 2A has four jetties 19A, one of which is 19A1 arched, adapted to be complementarily arranged in four receptacles 19B, one of which 19B1 is semi-circumferential, provided on the outer edge 12B of the lower base section 2B.

In detail, the pipes 13A and 13B, respectively contained within the upper 2A and lower 2B base sections by four apical shutters (not illustrated), have the fittings 14 integral with one of the two clamps 20 (see figure 4), preferably made of plastic material, mutually clamped using screws 21, for the functions to be described hereinafter.

### Dynamic description of the preferred embodiment

Thus, having completed the static description of a preferred embodiment of the polyvalent modular framework structure for photovoltaic, solar and hybrid panels, according to the present invention, following is a dynamic description of the same, i.e. the relative operation:
the context of operation is that of storage of power from solar rays through solar exposure panels of any known type and interpolated in any combination of the known types.

In this context, the framework 1 may be operated through any kind and type of known support for fixing to the ground or building roofs, separately or in a relative plurality, in detail:
in a superimposed series plurality, by coupling the four jetties 19A and 19A1 of the outer edge 12A of an upper base section 2A in the four complementary receptacles 19B and 19B1 of the outer edge 12B of a lower base section 2B;
and/or in a plurality in series arranged side by side, by connecting laterally projecting portions of the pipes 13A and 13B, where the embodiment provides for solar panels alone or combined to photovoltaic panels, with possible covering of the interruption interspaces through protection guards.

In any positioning, arrangement and aggregate, the framework 1 may be used for supporting photovoltaic panels and/or solar panels and/or hybrid photovoltaic and solar panels, by positioning the photovoltaic panel before the solar panel or vice versa.

This, by simply varying the interchangeable sidewalls 8α and 8β, or the relative projection 9α or 9β for adapting it to the thickness of the single elements or of the entirety and, where, i.e. where there is, or also there is, a solar panel, by inserting and connecting the pipes 13A and 13B in the outer larger chambers 4A and 4B of the upper 2A and lower 2B base sections.

### Alternative embodiments

It is obvious that in further alternative embodiments still falling within the solution concept underlying the embodiment illustrated above and claimed below, the polyvalent modular framework structure for photovoltaic, solar and hybrid panels, according to the present invention, may be alternatively implemented through equivalent technical and mechanical elements, or complemented by further integrative solutions, same case applying to the configuration of the relative components which may be varied to suit the purpose.

### Advantages of the invention

As clear from the detailed description of a preferred but non-exclusive embodiment as well as the aforementioned variant embodiments, the polyvalent modular framework structure for photovoltaic, solar and hybrid panels, according to the present invention, offers advantages corresponding to the attainment of the preset objects alongside other advantages:
actually, it integrates a functional and reliable solution concept for laying on site any type of solar exposure panel or a combination of solar exposure panels in any combination and arrangement.

### KEY TO REFERENCE NUMBERS

1) framework structure in its entirety
2A) upper base
2B) lower base
3A) left upright
3B) right upright
4A) outer larger chamber of the upper base
4B) outer larger chamber of the lower base
5) intermediate smaller chamber
6) inner edges
7) fixed sidewall
8α) interchangeable sidewall with prominent inward projection
8β) interchangeable sidewall with reduced inward projection
9α) prominent inward projection
9β) reduced inward projection
10A) photovoltaic panel
10B) solar panel
11 ) sloping aeration slits
12A) shaped surface outer edges of the upper base
12B) shaped surface outer edges of the lower base
13A) pipe of the upper base
13B) pipe of the lower base
14 ) fittings from pipes to solar panel in their entirety
15 ) pairs of T-shaped strips of the inner edges of the sections of the framework
16 ) foot of the interchangeable sidewalls
17 ) margin ribs of the inner edges of the sections of the framework
18 ) receptacles for apical gaskets of the interchangeable and fixed sidewalls
19A) jetties on the outer edge of the upper base section
19A1) arched jetty on the outer edge of the upper base section
19A) jetties on the outer edge of the upper base section
19A1) arched jetty on the outer edge of the upper base section
19B) receptacles on the outer edge of the lower base section
19B1) semi-circular receptacle on the outer edge of the lower base section
20 ) retention clamps for fitting the pipes into the upper and lower base sections
21 ) screws for fastening the retention clamps for the pipe fittings the pipes into the upper and lower base sections

## Claims

1. Modular framework structure suitable for photovoltaic, solar and hybrid panels, including modules (1) with sides (2A, 2B, 3A, 3B) made of sections, where the sections of two opposite sides (2A, 2B) define longitudinal chambers (4A, 4B) suitable to house pipes (13A, 13B) for the supply and outflow of a liquid and passing - through fittings(14) on inner edges (6) of the the framework (1), wherein such inner edges (6) have an identical configuration even on the other two sides (3A, 3B) of the framework (1) and they are adapted to constitute a polyvalent seat, through a fixed sidewall (7) and interchangeable sidewalls (8α, 8β) with differentiated projection (9α, 9β), for the perimeter of photovoltaic panels (10A) or sandwiched panel aggregates of photovoltaic panels (10A) and heat exchangers (10B), **characterised in that** it comprises:
- upper (2A) and lower (2B) sectioned bases having a rectangular quadrilateral transverse section each comprising at least one of said lonitudinal chambers (4A, 4B) and counterfaced inner edges (6) defined by said fixed sidewall (7) on the side which is in use exposed to the sun and by said interchangeable sidewalls (8α, 8β) diversified by protrusion of said relative inward projection (8α 9α);
- sectioned sides (3A, 3B) with a transverse section comprising said counterfaced inner edges (6) defined by said fixed sidewall (7) on the side which is in use exposed to the sun and by said interchangeable sidewalls (8α, 8β) diversified by protrusion of said relative inward projection (8α 9α).

2. Framework structure according to claim 1, **characterised in that** it comprises:
- upper (2A) and lower (2B) sectioned bases having a quadrilateral transverse section comprising an outer larger chamber (4A, 4B), an intermediate smaller chamber (5) and counterfaced inner edges (6);
- left (3A) and right (3B) sectioned sides with a transverse section comprising a chamber (5A, 5B) and counterfaced inner edges (6) defined by said fixed sidewall (7)

3. Framework structure according to claim 2, **characterised in that** said inner edges (6) of said upper (2A) and lower (2B) base sections as well as said mounted sections (3A, 3B) have at least one T-shaped strip (15) under whose jetty or resistance there is fitted the foot or lever (16) of said interchangeable sidewalls (8α, 8β) supported at the heel or fulcrum by a margin rib (17) opposite to said fixed sidewall (7).

4. Framework structure according to any of the preceding claims, **characterised in that** both said fixed sidewall (7) and said interchangeable sidewalls (8α, 8β) have - at the apex - opposite receptacles (18) for the retention gaskets for the abutment of a photovoltaic panel (10A) and/or a solar panel (10B) and/or glasses and/or rolled sections for relative containment.

5. Framework structure according to any of the preceding claims, **characterised in that** pipes (13A, 13B) are respectively inserted within said upper (2A) and lower (2B) base sections and have said fittings (14) integral with one of two clamps (20) preferably made of plastic material mutually clamped by means of screws (2).

6. Framework structure according to any of the preceding claims 2 to 4, **characterised in that** pipes (13A, 13B) are respectively inserted within said upper (2A) and lower (2B) base sections and project laterally from the overall dimensions of the framework (1) and that said upper (2A) and lower (2B) base sections are apically closed by shutters.

7. Framework structure according to any of the preceding claims 2 to 6, **characterised in that** the outer edge (12A) of said upper base section (2A) has means (19A, 19A1) complementarily associated to means (19B, 19B1) provided on the outer edge (12B) of said lower (2B) base section.

8. Framework structure according to claim 7, **characterised in that** the outer edge (12A) of said upper base section (2A) has four jetties (19A), one of which is arched (19A1), adapted to be complementarily housed in four receptacles (19B), one of which is semi-circumferential (19B1), provided on the outer edge (12B) of said lower base section (2B).

9. Framework structure according to any of the preceding claims 2 to 8, **characterised in that** said upper (2A) and lower (2B) base sections are provided with sloping aeration slits (11) which place the respective chambers (4A, 4B) in communication with the outside environment.

10. Framework structure according to any of the preceding claims, **characterised in that** said sections (2A, 2B, 3A, 3B) are made of metal, preferably aluminium.

## Patentansprüche

1. Modulare Rahmenstruktur für Photovoltaik-, Solar- und Hybridplatten, umfassend Module (1) mit aus Profilen bestehenden Rahmenseiten (2A, 2B, 3A, 3B), wobei an zwei gegenüberliegenden Seiten (2A, 2B) die Profile Längskammern (4A, 4B) bilden, die für die Aufnahme von Rohren (13A, 13B) für den Zufluss und den Abfluss einer Flüssigkeit geeignet sind, und wobei an den Innenwänden (6) des Rahmens (1) durchgehende Fittinge (14) vorgesehen sind und die Innenwände (6) auch an den beiden anderen Seiten (3A, 3B) des Rahmens (1) gleich ausgebildet sind und einen polivalenten Sitz an einer festen Seitenwand (7) und auswechselbaren Seitenwänden (8α, 8β) mit unterschiedlichem Vorsprung (9α, 9β) für den umlaufenden Randbereich von Photovoltaikplatten (10A) oder Sandwicheinheiten mit Photovoltaikplatten (10A) und Wärmetauschern (10B) bilden, **gekennzeichnet durch**
- obere (2A) und untere (2B) Basisprofile mit rechtwinkligen Viereckquerschnitten, von denen jedes wenigstens eine Längskammer (4A, 4B) sowie einander gegenüberliegende Innenwände (6) aufweist, welche auf der im Betrieb der Sonne zugewandten Seite **durch** eine feste Seitenwand (7) und **durch** die auswechselbaren Seitenwände (8α, 8β) ergänzt wird, die **durch** die Auskragung des nach innen vorstehenden Vorsprungs (8α, 9α) diversifizierbar sind,
- profilierte Seiten (3A, 3B) mit einem die Innenwände (6) aufweisenden Querschnitt, der definiert ist **durch** eine feste, im Betrieb der Sonne zugewandte Seitenwand (7) und **durch** die auswechselbaren Seitenwände (8α, 8β), die **durch** die Auskragung des nach innen vorstehenden Vorsprungs (8α, 9α) diversifizierbar sind.

2. Rahmenstruktur nach Anspruch 1, **gekennzeichnet durch**
- obere (2A) und untere (2B) Basisprofile mit rechtwinkligen Viereckquerschnitten mit einer äußeren, großen Kammer (4A, 4B), einer kleineren Zwischenkammer (5) und einander gegenüberliegenden Innenwänden (6),
- linke (3A) und rechte (3B) Profilseiten, die im Querschnitt eine **durch** die festen Seitenwände (7) begrenzte Kammer (5A, 5B) sowie einander gegenüberliegende Innenwände (6) aufweisen.

3. Rahmenstruktur nach Anspruch 2, **dadurch gekennzeichnet, dass** die Innenwände (6) der oberen (2A) und der unteren (2B) Basisprofile sowie die damit verbundenen Säulenprofile (3A, 3B) wenigstens einen T-förmigen Steg (15) haben, in dessen Vorsprung oder Widerstand der Fuß oder Hebel (16) der auswechselbaren Seitenwände (8α, 8β) eingreift, der sich am Rand oder Drehpunkt über einen der festen Seitenwand (7) gegenüberliegenden Randsteg (17) abstützt.

4. Rahmenstruktur nach einem der vorhergehenden Ansprüche, **dadurch gekennzeichnet, dass** die beiden festen Seitenwände (7) sowie die auswechselbaren Seitenwände (8α, 8β) an den Enden einander gegenüberliegende Sitze (18) für die Aufnahme von Dichtungen haben, die an einer Photovoltaikplatte (10A) und/oder einer Solarplatte (10B) und/oder Gläsern und/oder Verbundplatten anliegen.

5. Rahmenstruktur nach einem der vorhergehenden Ansprüche, **dadurch gekennzeichnet, dass** Rohre (13A, 13B) in die oberen (2A) bzw. unteren (2B) Basisprofile eingesetzt und mit den Fittingen (14) verbunden sind, die integral mit einer von zwei Klemmbacken (20) ausgebildet sind, welche vorzugsweise aus Kunststoff bestehen und mittels Schrauben (2) miteinander verklemmt sind.

6. Rahmenstruktur nach einem der Ansprüche 2 bis 4, **dadurch gekennzeichnet, dass** Rohre (13A, 13B) in die oberen (2A) bzw. unteren (2B) Basisprofile eingesetzt sind und seitlich über das Profil des Rahmens (1) vorstehen, wobei die oberen (2A) und die unteren (2B) Basisprofile an ihrem Ende durch die Verschlussstücke abgeschlossen sind.

7. Rahmenstruktur nach einem der Ansprüche 2 bis 6, **dadurch gekennzeichnet, dass** die Außenwand (12A) des oberen Basisprofils (2A) Mittel (19A, 19 A1) für den gegenseitigen Anschluss an Mittel (19B, 19 B1) an der Außenwand (12 B) des unteren Basisprofils (2B) aufweisen.

8. Rahmenstruktur nach Anspruch 7, **dadurch gekennzeichnet, dass** die Außenwand (12A) des oberen Basisprofils (2A) vier Vorsprünge (19A) hat, von denen einer bogenförmig (19 A1) ist und die zum gegenseitigen Eingriff in vier Sitze (19B) an der Außenwand (12B) des unteren Basisprofils (2B) ausgebildet sind, von denen einer halbkreisförmig (19 B1) ist.

9. Rahmenstruktur nach einem der Ansprüche 2 bis 8, **dadurch gekennzeichnet, dass** das obere (2A) und das untere (2B) Basisprofil abfallende Belüftungsschlitze (11) haben, über die die Kammern (4A, 4B) mit der äußeren Umgebung verbunden sind.

10. Rahmenstruktur nach einem der vorhergehenden Ansprüche, **dadurch gekennzeichnet, dass** die Rahmenprofile (2A, 2B, 3A, 3B) aus Metall, vorzugsweise Aluminium bestehen.

## Revendications

1. Stucture de cadre modulaire pour panneaux photovoltaïques, solaires et hybrides, comprenant des modules (1) avec des côtés profilés de cadre (2A, 2B, 3A, 3B) dont deux côtés profilés (2A, 2B) délimitent des chambres longitudinales (4A, 4B) aptes à loger des tubes d'admission et d'écoulement (13A, 13B) d'un liquide, les parois intérieures (6) du cadre (1) étant munies de raccords traversants (14), lesdites parois intérieures (6) étant identiques aussi sur les deux autres côtés (3A, 3B) du cadre (1) et formant un logement polyvalent sur une paroi fixe (7) et sur des parois échangeables (8α, 8β) avec des ressauts (9α, 9β) pour le bord périphérique des panneaux photovoltaïques (10A) ou des unités sandwich composées de panneaux photovoltaïques (10A) et d'échangeurs de chaleur (10B), **caractérisée par**
- des profilés de base supérieurs (2A) et inférieurs (2B) à sections quadrangulaires orthogonales, chacun desquels comprend au moins une chambre longitudinale (4A, 4B) et des parois intérieures opposées (6) complétées par une paroi fixe (7) orientée en fonctionnement vers le soleil et par lesdites parois échangeables (8α, 8β) aptes à être diversifiées par la mesure de saillie vers l'intérieur du ressaut (8α, 8β),
- des côtés profilés (3A, 3B) à section comportant lesdites parois intérieures (6), ladite section étant définie par une paroi fixe orientée en fonctionnement vers le soleil, et par lesdites parois échangeables (8α, 8β) aptes à être diversifiées par la mesure de saillie vers l'intérieur du ressaut (8α, 9α).

2. Structure de cadre selon la revendication 1, **caractérisée par**
- des profilés de base supérieurs (2A) et inférieurs (2B) à sections quadrangulaires orthogonales comprenant une grande chambre externe (4A, 4B), une petite chambre intermédiare (5) et des parois intérieures (6) opposées l'une à l'autre,
- des côtés profilés droits (3A) et gauches (3B) d'une section transversale laquelle comprend une chambre (5A, 5B) délimitée par les parois fixes (7) et les parois intérieures opposées (6).

3. Structure de cadre selon la revendication 2, cararactérisée par le fait que les parois intérieures (6) des profilés de base supérieurs (2A) et inférieurs (2B) et les profilés à colonne (3A, 3B) y étant reliés présentent au moins une nervure en T (15) formant une saillie ou une résistance dans laquelle s'engage le pied ou le levier (16) des parois latérales échangeables (8α, 8β) de sorte qu'il s'appuie au bord ou au centre de rotation au moyen d'une nervure de rebord (17) opposée à la paroi fixe (7).

4. Structure de cadre selon une des revendications précédentes, **caractérisée par le fait que** les deux parois fixes (7) et les parois échangeables (8α, 8β) présentent sur leurs extrémités des logements opposés (18) pour des garnitures aptes à s'appuyer à un panneau photovoltaïque (10A) et/ou un panneau solaire (10B) et/ou à une plaque de verre et/ou à une plaque sandwich.

5. Structure de cadre selon une des revendications précédentes, **caractérisée par le fait que** dans les profilés de base supérieurs (2A) ou inférieurs (2B) sont logés des tubes (13A, 13B) reliés par ledits raccords (14) formés intégralement avec une des deux mâchoires de serrage (20), de préférence en matière plastique et serrées entre elles par des vis (2).

6. Structure de cadre selon une des revendications 2 à 4, **caractérisée par le fait que** dans les profilés de base supérieurs (2A) ou inférieurs (2B) sont logés des tubes (13A, 13B) qui s'étendent latéralement en saillie du profilé du cadre (1), les extrémités desdits profilés étant fermées par des obturateurs.

7. Structure de cadre selon une des revendications 2 à 6, **caractérisée par le fait que** la paroi externe (12A) du profilé de base supérieur (2A) est munie de moyens (19A, 19A1) pour le mutuel raccord à de moyens (19B, 19B1) sur la paroi externe (12B) du profilé de base inférieur (2B).

8. Structure de cadre selon la revendication 7, **caractérisée par le fait que** la paroi externe (12A) du profilé de base supérieur (2A) présente quatre protubérances (19A), dont l'une (19A1) est arquée, qui sont formées de sorte qu'elles sont aptes à s'engager dans quatre logements (19B) formés sur la paroi extérieure (12B) du profilé de base inférieur (2B), l'un étant de forme semi-circulaire (19B1).

9. Structure de cadre selon une des revendications 2 à 8, **caractérisée par le fait que** les profilés de base supérieur (2A) et inférieur (2B) sont munis de fentes d'aération en plan incliné (11) communicant avec l'environnement extérieur à travers les chambres (4A, 4B).

10. Structure de cadre selon une des revendications précédentes, **caractérisée par le fait que** les côtés profilés de cadre (2A, 2B, 3A, 3B) sont en métal, de préférence en aluminium.
